# EUROPEAN PATENT APPLICATION

(11) **EP 4 470 755 A1**
(43) Date of publication of application: **04.12.2024**
(21) Application number: 23742938.6
(22) Date of filing: 18.01.2023
(51) Int. Cl.: B29C 64/264, B29C 64/124, B33Y 30/00

(54) **LIGHT SOURCE DEVICE AND 3D PRINTING APPARATUS**

(30) Priority: 24.01.2022 CN 202220209814 U
(71) Applicant: Shenzhen Creality 3D Technology Co., Ltd., Shenzhen, Guangdong 518110 (CN)
(72) Inventor: CHEN, Chun, Shenzhen, Guangdong 518110 (CN); CHEN, Shuquan, Shenzhen, Guangdong 518110 (CN); CHEN, Xiaochan, Shenzhen, Guangdong 518110 (CN)
(74) Representative: Zaboliene, Reda
(86) International application number: PCT/CN2023/072925
(87) International publication number: WO 2023/138623

(57) **Abstract**

A light source device and a 3D printing apparatus. The light source device comprises an optical machine assembly (100), a reflecting mirror assembly (200), and a workbench (300). The optical machine assembly (100) and the reflecting mirror assembly (200) are spaced apart from each other in a first direction, and are located below the workbench. The optical machine assembly (100) can be rotated in a second direction, the reflecting mirror assembly (200) can be rotated in a horizontal third direction, and the reflecting mirror assembly (200) is configured to reflect, onto the workbench (300), a light ray emitted from the optical machine assembly (100), wherein the first direction, the second direction and the horizontal third direction are pairwise perpendicular to each other. The optical machine assembly (100) can be rotated in the second direction to adjust an incident angle of an incident light ray, thereby adjusting the angle of an emergent light ray. The reflecting mirror assembly (200) can be rotated in the horizontal third direction to adjust the angle of an emergent light ray, thereby adjusting the position of the contour line of a projection that is projected onto the workbench by the optical machine assembly (100) by means of the reflection of the reflecting mirror assembly (200). Therefore, the projection effect is improved, and the printing accuracy is then increased.

## Description

### FIELD

The subject matter relates to the field of 3D printing technology, and in particular, to light source device and 3D printing apparatus.

### BACKGROUND

Photocuring 3D printing apparatus mainly irradiates liquid photosensitive resin with ultraviolet light or other light sources to trigger a photochemical reaction, so that the exposed liquid photosensitive resin is cured and shaped. At present, due to processing errors or assembly errors, the shape and size of the model printed by the photocuring 3D printing apparatus have large deviations, resulting in some small features that cannot be printed or the shape is blurred, resulting in low printing accuracy.

### SUMMARY

According to this, it is necessary to provide a light source device for the technical problem of low printing accuracy caused by factors such as processing errors or assembly errors.

A light source device, includes an optomechanical assembly, a reflector assembly, and a workbench; the optomechanical assembly and the reflector assembly are arranged at intervals along a first direction, and both are located below the workbench, the reflector assembly is located at an exit end of the optomechanical assembly, the optomechanical assembly is capable of rotating around a second direction, the reflector assembly is capable of rotating around a horizontal third direction, and the reflector assembly is configured to reflect light emitted by the optomechanical assembly to the workbench, the first direction, the second direction, and the horizontal third direction are perpendicular to each other.

In one of the embodiments, the light source device includes a fixing frame, the fixing frame is connected to the workbench, the optomechanical assembly includes an optomechanical component and a rotating member extending in a vertical direction, an end of the rotating member is connected to the optomechanical component, and another end is rotatably connected to the fixing frame, and the optomechanical component is capable of rotating around an axial direction of the rotating member.

In one of the embodiments, the optomechanical assembly further includes a moving member, the fixing frame is provided with a moving hole, an end of the moving member is connected to the optomechanical component, and another end is slidably connected to a hole wall of the moving hole, and when the rotating member rotates relative to the fixing frame, the moving member is capable of sliding in the moving hole.

In one of the embodiments, the fixing frame includes an adapter plate and two side plates, the two side plates are respectively connected to two ends of the adapter plate, an end of the side plate away from the adapter plate is connected to the workbench, the rotating member passes through the adapter plate, and the moving hole is provided on the adapter plate.

In one of the embodiments, the reflector assembly includes a reflector and a bracket extending along the horizontal third direction, the light source device includes a box, the bracket is arranged inside the box, the reflector is mounted on the bracket, a lower end of the bracket is rotatably connected to a side wall of the box, and an upper end of the bracket is capable of rotating around the lower end of the bracket.

In one of the embodiments, the side wall of the box is provided with sliding hole, the upper end of the bracket is slidably connected to the hole wall of the sliding hole, when the upper end of the bracket rotates around the lower end of the bracket, the upper end of the bracket is capable of sliding in the sliding hole.

In one of the embodiments, the reflector assembly further includes a fastener, the box includes a first board and a second board arranged at intervals along the horizontal third direction, the bracket is located between the first board and the second board, the first board and the second board are provided with the sliding holes, and an end of the fastener extends into the sliding holes on the first board and the second board respectively, and is detachably connected to the upper end of the bracket at the corresponding position.

In one of the embodiments, the reflector assembly further includes a bottom plate, the lower end of the bracket is rotatably connected to the bottom plate, two ends of the bottom plate along the horizontal third direction are respectively connected to the first board and the second board, the box includes a third board, an end of the third board is connected to the first board, and another end is connected to the second board, and the bottom plate is attached to the third board.

In one of the embodiments, the light source device further includes a jig, the jig is used to be installed on a light transmission hole on the workbench, an annular area is provided on an edge of the jig, and a plurality of spaced first scale lines extending along the first direction and a plurality of spaced second scale lines extending along the horizontal third direction are provided on the annular area, the light emitted by the optomechanical assembly is capable of being projected onto the jig to form a projection which falls within the annular area, when both the optomechanical assembly and the reflector assembly are rotated to an operating position, a contour lines on both sides of the projection along the horizontal third direction are parallel to the first scale line, and the contour lines on both sides of the projection along the first direction are parallel to the second scale line.

The present disclosure provides a 3D printing apparatus, which can solve at least one of the above technical problems.

A 3D printing apparatus includes the above-mentioned light source device.

### Beneficial effect:

The light source device provided by the embodiment of the present disclosure includes an optomechanical assembly, a reflector assembly, and a workbench; the optomechanical assembly and the reflector assembly are arranged at intervals along a first direction, and both are located below the workbench, the reflector assembly is located at an exit end of the optomechanical assembly, the optomechanical assembly is capable of rotating around a second direction, the reflector assembly is capable of rotating around a horizontal third direction, and the reflector assembly is configured to reflect light emitted by the optomechanical assembly to the workbench, wherein the first direction, the second direction, and the horizontal third direction are perpendicular to each other. The present disclosure reflects the light emitted by the optomechanical assembly to the workbench through the reflector assembly, so that the components on the workbench can work normally; the optomechanical assembly is capable of rotating around the second direction to adjust the incident angle of the incident light emitted by the optomechanical assembly, thereby adjusting the angle of the outgoing light; the reflector assembly is capable of rotating around the first direction to adjust the angle of the outgoing light, thereby adjusting the position of the contour line of the projection projected by the optomechanical assembly on the workbench, improving the projection effect, and then improving printing accuracy.

The 3D printing apparatus provided by the embodiment of the present disclosure includes the above-mentioned light source device, which can solve at least one of the above-mentioned technical problems.

### BRIEF DESCRIPTION OF THE DRAWINGS

Fig. 1 is the first schematic view of the light source device provided by the present disclosure;
Fig. 2 is the second schematic view of the light source device provided by the present disclosure;
Fig. 3 is a partial exploded view of the light source device provided by the present disclosure;
Fig. 4 is a first schematic view of the optomechanical assembly in the light source device provided by the present disclosure;
Fig. 5 is a second schematic view of the optomechanical assembly in the light source device provided by the present disclosure;
Fig. 6 is an exploded view of the optomechanical assembly in the light source device provided by the present disclosure;
Fig. 7 is a partial exploded view of the reflector assembly in the light source device provided by the present disclosure;
Fig. 8 is a schematic view of the jig in the light source device provided by the present disclosure;
Fig. 9 is a first schematic view of light projected on the workbench in the light source device provided by the present disclosure;
FIG. 10 is a second schematic view of light projected on the workbench in the light source device provided by the present disclosure.

Reference numerals: 100-optomechanical assembly; 110-optomechanical component; 111-exit end; 120-fixing frame; 121-rotating hole; 122-moving hole; 123- adapter plate; 124-side plate; 125-support plate; 130-rotating member; 140-moving member; 200-reflector assembly; 210-reflector; 220- bracket; 221-first bent plate; 230 -box; 231-the first board; 232-the second board; 233-the third board; 240-fastener; 250-sliding hole; 260-glass buckle; 270-bottom plate; 271- second bent plate; 300- workbench; 310- light transmission hole; 320- jig; 330- first scale line; 340- second scale line; 360-projection; 370-first contour line; 380-second contour line; 410-housing; 420-base; 500-forming platform device; 600-drivice device; 700-trough device; 800- rackmount.

### DETAILED DESCRIPTION

In order to make the above-mentioned purposes, features and advantages of the present disclosure more obvious and understandable, the following in conjunction with the attached Figure is described in detail to the specific embodiment of the present disclosure. In the following description, numerous specific details are set forth in order to provide a full understanding of the present disclosure. However, the present disclosure can be implemented in many other ways different from those described here, and those skilled in the art can make similar improvements without violating the connotation of the present disclosure, so the present disclosure is not limited by the specific embodiments disclosed below.

In the description of the present disclosure, it should be understood that the orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" are according to the drawings, the orientation or positional relationship shown is only for the convenience of describing the present disclosure and simplifying the description, and does not indicate or imply that the device or element referred to must have a specific orientation, be constructed and operated in a specific orientation, and therefore cannot be construed as a limitation of the present disclosure.

In addition, the terms "first" and "second" are used for descriptive purposes only, and cannot be interpreted as indicating or implying relative importance or implicitly specifying the quantity of indicated technical features. Thus, the features defined as "first" and "second" may explicitly or implicitly include at least one of these features. In the description of the present disclosure, "plurality" means at least two, such as two, three, etc., unless otherwise specifically defined.

In the present disclosure, unless otherwise clearly specified and limited, the terms "installation", "connection", "connected", "fixation" and other terms should be understood in a broad sense, for example, it can be a fixed connection, or a detachable connection, or integrated; it can be a mechanical connection, it can also be an electrical connection; it can be a direct connection or an indirect connection through an intermediate medium, it can be the internal communication of two elements or the interaction relationship between two elements, unless otherwise clearly defined. Those of ordinary skill in the art can understand the specific meanings of the above terms in the present disclosure according to specific situations.

In the present disclosure, unless otherwise specified and limited, the first feature is "on" the second feature or "under" may mean that the first and second features are in direct contact, or the first and second features are in indirect contact through an intermediary. Moreover, "above", " overhead" and "up" the first feature on the second feature may mean that the first feature is directly above or obliquely above the second feature, or simply means that the first feature is higher in level than the second feature. "Below", "beneath" and "under" the first feature may mean that the first feature is directly below or obliquely below the second feature, or simply means that the first feature is less horizontally than the second feature.

It should be noted that when an element is referred to as being "fixed on" or "disposed on" another element, it may be directly on the other element or there may be an intervening element. When an element is referred to as being "connected to" another element, it can be directly connected to the other element or intervening elements may also be present. As used herein, the terms "vertical", "horizontal", "upper", "lower", "left", "right" and similar expressions are for the purpose of illustration only and are not intended to represent the only embodiments.

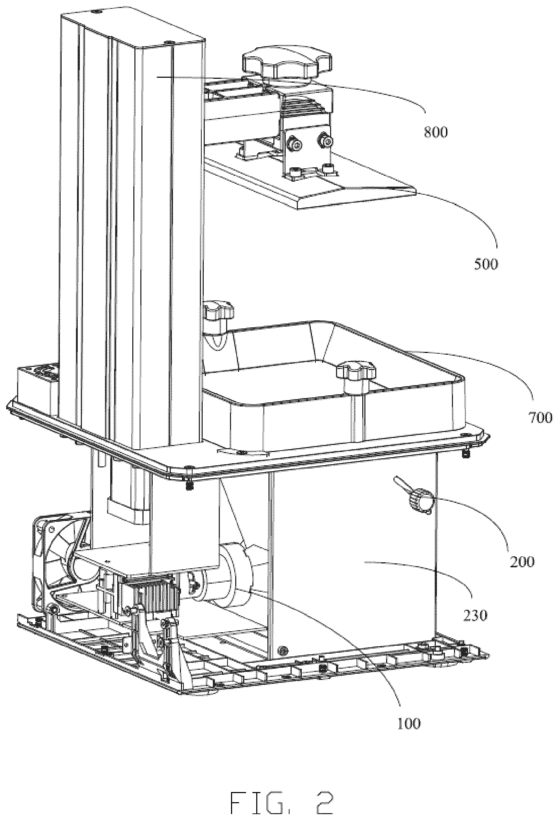

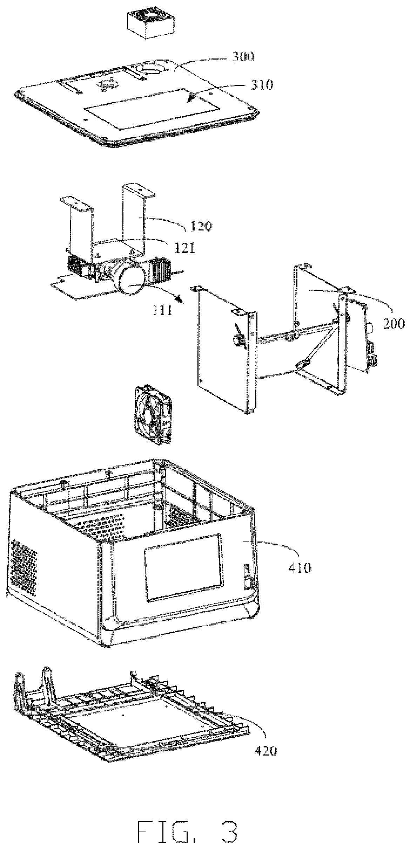

Referring to Fig. 1, Fig. 2 and Fig. 3, Fig. 1 is the first schematic view of the light source device provided by the present disclosure; Fig. 2 is the second schematic view of the light source device provided by the present disclosure; Fig. 3 is a partial exploded view of the light source device provided by the present disclosure. The light source device provided by an embodiment of the present disclosure includes an optomechanical assembly 100, a reflector assembly 200, and a workbench 300; the optomechanical assembly 100 and the reflector assembly 200 are arranged at intervals along the first direction, and the two are located below the workbench 300, and the reflector assembly 200 is located at the exit end 111 of the optomechanical component 110. The optomechanical assembly 100 is capable of rotating around a second direction, the reflector assembly 200 is capable of rotating around a horizontal third direction, and the reflector assembly 200 is configured to reflect light emitted by the optomechanical assembly 100 to the workbench 300, wherein the first direction, the second direction, and the horizontal third direction are perpendicular to each other.

The light source device in this application is applied to photocuring 3D printing apparatus. There is a light transmission hole 310 on the workbench 300, and a screen assembly is installed above the light transmission hole 310. The trough device 700 has a light hole corresponding to the light transmission hole 310, and the trough device 700 is configured to hold consumables. The light emitted by the optomechanical assembly 100 is reflected to the workbench 300 by the reflector assembly 200, so that the light is irradiated on the screen assembly through the light transmission hole 310, and irradiated on the consumables through the release film in the trough device 700, this results in the curing and molding of the consumables within the trough device 700.

Specifically, in this application, the optomechanical assembly 100 is capable of rotating around the second direction to adjust the incident angle of the incident light emitted by the optomechanical assembly 100, thereby adjusting the angle of the outgoing light; the reflector assembly 200 is capable of rotating around the first direction to adjust the angle of the outgoing light, thereby adjusting the position of the outline of the projection 360 projected by the optomechanical assembly 100 on the workbench 300, improving the effect of the projection 360, and further improving printing accuracy.

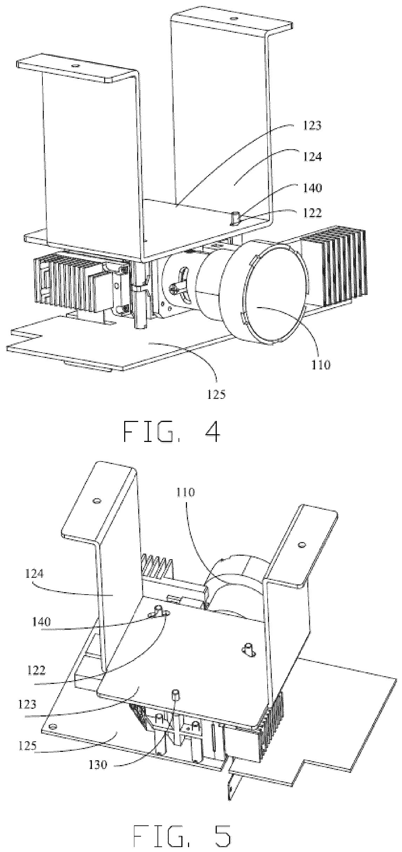

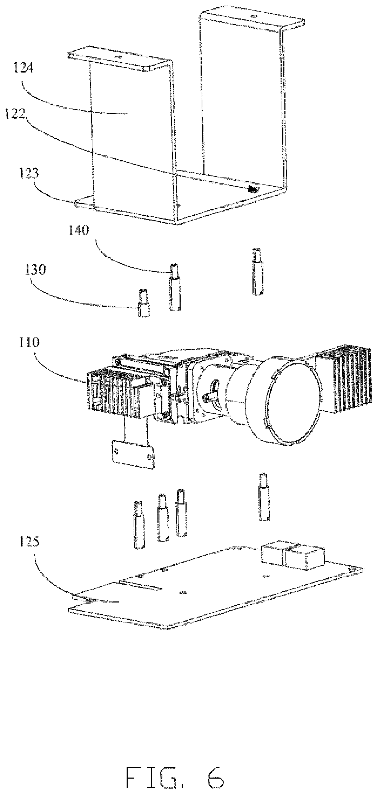

Referring to Fig. 4, Fig. 5 and Fig. 6, Fig. 4 is a first schematic view of the optomechanical assembly in the light source device provided by the present disclosure; Fig. 5 is a second schematic view of the optomechanical assembly in the light source device provided by the present disclosure; Fig. 6 is an exploded view of the optomechanical assembly in the light source device provided by the present disclosure. In one embodiment, the light source device includes a fixing frame 120, the fixing frame 120 is connected to the workbench 300, the optomechanical assembly 100 includes an optomechanical component 110 and a rotating member 130 extending in the vertical direction, one end of the rotating member 130 is connected to the optomechanical component 110, and the other end is rotatably connected to the fixing frame 120, and the optomechanical component 110 is capable of rotating around the axial direction of the rotating member 130.

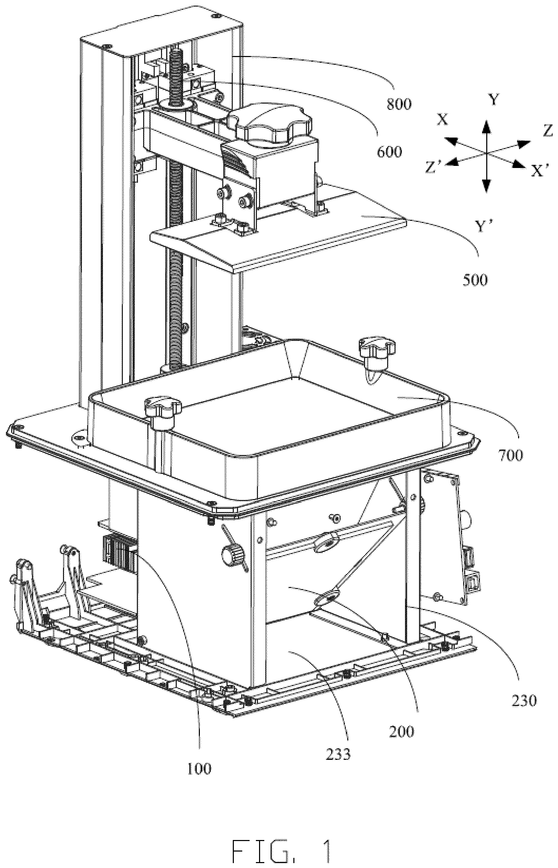

Specifically, the second direction is the vertical direction, and the first direction is the horizontal direction, so the optomechanical assembly 100 and the reflector assembly 200 are located on the same horizontal line, thereby saving space and reducing the size of the light source device in the vertical direction. For the convenience of description, in Fig. 1 of the specification, define XX' as the first direction, YY' as the second direction, and ZZ' as the horizontal third direction. Wherein the first direction, the second direction, and the horizontal third direction are perpendicular to each other. The first direction, the second direction, and the horizontal third direction are all described below.

Further, the fixing frame 120 is located below the workbench 300, and the light transmission hole 310 of the workbench 300 is located above the reflector assembly 200, so that the reflector assembly 200 can reflect the light emitted by the optomechanical assembly 100 into the light transmission hole 310 of the workbench 300. Exemplary, the optomechanical assembly 100 is installed under the fixing frame 120, so as to save space, and reduce the size of the light source device in the horizontal direction.

Furthermore, the fixing frame 120 is provided with a rotating hole 121, and one end of the rotating member 130 away from the optomechanical assembly 100 is rotatably connected to the hole wall of the moving hole 122, and when the rotating member 130 rotates relative to the fixing frame 120, the rotating member 130 is capable of rotating in the rotating hole 121. It should be noted that the rotation of the optomechanical component 110 may be adjusted manually by an external operator. In other embodiments, a motor driver may also be connected to the rotating member 130, and the rotating member 130 may be driven to rotate by the motor driver, thereby driving the optomechanical component 110 to rotate.

Continuing to refer to Fig. 4, Fig. 5 and Fig. 6, in one embodiment, the optomechanical assembly 100 further includes a moving member 140, and the fixing frame 120 is provided with a moving hole 122. One end of the moving member 140 is connected to the optomechanical component 110, and the other end is slidably connected to the wall of the moving hole 122. When the rotating member 130 rotates relative to the fixing frame 120, the moving member 140 is capable of sliding in the moving hole 122.

Specifically, the moving member 140 extends in a vertical direction. When the rotating member 130 rotates relative to the fixing frame 120, the moving member 140 is capable of sliding in the moving hole 122. Since the moving member 140 is slidably connected to the hole wall of the moving hole 122, so that when the optomechanical component 110 drives the moving member 140 to rotate, the hole wall of the moving hole 122 may play a guiding role for the rotation of the moving member 140, and then play a guiding role for the rotation of the optomechanical component 110, so that the optomechanical component 110 rotates stably. Preferably, the moving hole 122 is a waist hole.

In one of the embodiments, the light source device further includes a connecting member, and the rotating member 130 passes through the rotating hole 121 and is detachably connected to the connecting member. When the connecting member is connected to the rotating member 130, the optomechanical assembly 100 is mounted on the fixing frame 120, and in the vertical direction, the optomechanical assembly 100 remains stationary relative to the fixing frame 120. When the rotating member 130 rotates relative to the fixing frame 120, the optomechanical assembly 100 rotates synchronously with the rotating member 130, thereby adjusting the incident angle of the incident light emitted by the optomechanical assembly 100, and then adjusting the angle of the outgoing light, so that the light projected by the optomechanical component 110 on the workbench 300 is capable of completely cover the release film in the material tank device 700, thereby ensuring the size, and shape of the printed model and improving printing accuracy. When the connecting member and the rotating member 130 are disassembled, the optomechanical assembly 100 may be disassembled, which facilitates the replacement of the optomechanical assembly 100. Exemplary, the connecting member is a screw.

Further, there are multiple connecting members, and the moving member 140 passes through the moving hole 122 and is detachably connected to the corresponding connecting member, so that the optomechanical component 110 is stably installed on the fixing frame 120 by the connection between the moving member 140 and the connecting member.

Furthermore, the number of moving members 140 is two, and two corresponding moving holes 122 are provided on the fixing frame 120, wherein the connecting lines between the centers of the two moving holes 122 and the rotating holes 121 form a triangular shape, so that the optomechanical component 110 is stably supported.

In yet another embodiment, the light source device includes a support plate 125 and a support column, the support plate 125 is connected with the optomechanical component 110. A rotating hole 121 is provided on the support plate 125. The support column is provided with a first boss protruding outward along its radial direction, the first boss is located near the top of the support column. The top of the support column passes through the rotating hole 121 and is rotatably connected to the hole wall of the rotating hole 121. The first boss is located below the rotating hole 121. The bottom end of the support plate 125 abuts against the top end surface of the first boss, so that the support plate 125 is supported by the first boss, so that the optomechanical component 110 is stably supported. When the optomechanical component 110 rotates relative to the fixing frame 120, the support plate 125 rotates relative to the support column, so that the optomechanical component 110 rotates stably.

The light source device also includes a sliding column. The sliding column is provided with a second boss protruding outward along its radial direction. The second boss is located near the top of the sliding column. A moving hole 122 is provided on the support plate 125. The top of the sliding column passes through the moving hole 122, and is rotatably connected to the hole wall of the moving hole 122. The second boss is located below the moving hole 122. The bottom end of the support plate 125 is in contact with the top end surface of the second boss, so that the support plate 125 is supported by the second boss, so that the optomechanical component 110 is stably supported. When the optomechanical component 110 rotates relative to the fixing frame 120, the support plate 125 rotates relative to the sliding column, so that the optomechanical component 110 rotates stably.

In yet another embodiment, the light source device further includes a connector, and further includes a support plate 125, a support column, and a sliding column. The specific connection relationship is the same as that described above, so details will not be repeated here. By setting in this way, the optomechanical component 110 is capable of being stably supported.

Still referring to Fig. 4, Fig. 5 and Fig. 6, in one embodiment, the fixing frame 120 includes an adapter plate 123 and two side plates 124, the two side plates 124 are respectively connected to the two ends of the adapter plate 123, the end of the side plate 124 away from the adapter plate 123 is connected to the workbench 300, the rotating member 130 passes through the adapter plate 123, and the moving hole 122 is arranged on the adapter plate 123.

Specifically, the rotating hole 121 is disposed on the adapter plate 123, and the two side plates 124 are respectively connected to two ends of the adapter plate 123 along the horizontal third direction, so as to avoid interference to light emitted by the optical engine component 110. The two side plates 124 are respectively connected to both ends of the adapter plate 123, so that the adapter plate 123 is capable of being stably connected to the workbench 300, so that the optomechanical component 110 is stably supported.

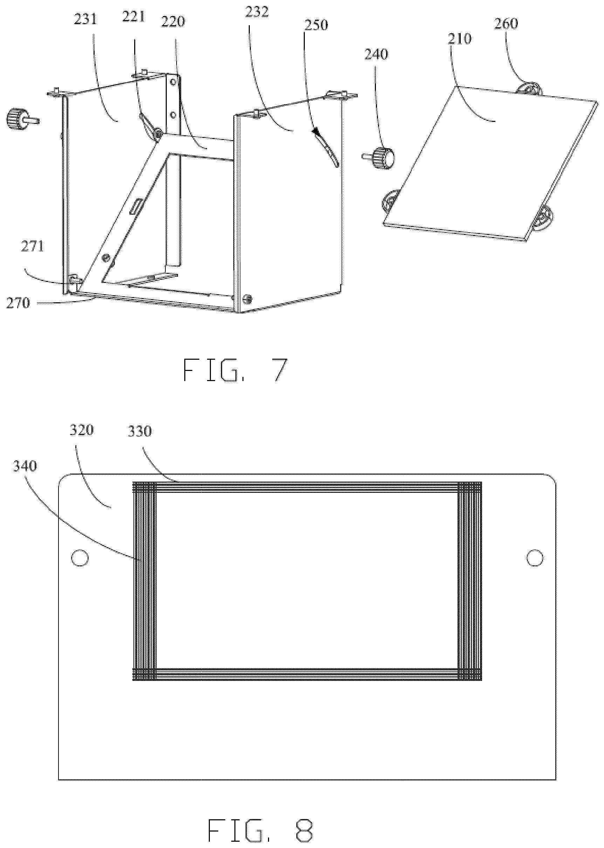

Referring to Fig. 3 and Fig. 7, Fig. 7 is a partial exploded view of the reflector assembly in the light source device provided by the present disclosure. In one of the embodiments, the reflector assembly 200 includes a reflector 210 and a bracket 220 extending along the horizontal third direction. The light source device includes a box 230. The bracket 220 is arranged inside the box 230. The reflector 210 is mounted on the bracket 220. The lower end of the bracket 220 is rotatably connected to the side wall of the box 230, and the upper end of the bracket 220 is capable of rotating around the lower end of the bracket 220.

Specifically, the lower end of the bracket 220 is rotatably connected to the side wall of the box 230, thereby limiting the position of the bottom end of the bracket 220 relative to the optomechanical component 110, so that the reflector 210 is always on the side of the exit end 111 of the optomechanical component 110. When the upper end of the bracket 220 rotates around the lower end of the bracket 220, the angle of the outgoing light is adjusted so that the light projected by the optomechanical component 110 on the workbench 300 is capable of completely cover the release film in the trough device 700, thereby ensuring the size and shape of the printed model and improving printing accuracy.

Further, the reflector assembly 200 includes a glass buckle 260, a plurality of glass buckles 260 are installed on the edge of the bracket 220, and the reflector 210 is fixed on the bracket 220 through the glass buckle 260. In other embodiments, other fixing members may also be used, as long as they may realize the stable fixing of the reflector 210 on the bracket 220.

Continue to refer to Fig. 3 and Fig. 7, in one of them embodiment, the side wall of box 230 is provided with sliding hole 250, and the upper end of bracket 220 is slidably connected to the hole wall of sliding hole 250, when the upper end of bracket 220 wraps around the lower end of the bracket 220, the upper end of the bracket 220 is capable of sliding in the sliding hole 250.

Specifically, the upper end of the bracket 220 is slidably connected to the hole wall of the sliding hole 250. When the rotating member 130 rotates relative to the fixing frame 120, the sliding hole 250 can guide the rotation of the reflector 210, so that the reflector 210 is capable of rotating stably. Exemplary, the sliding hole 250 is a waist hole.

Referring to Fig. 7, in one of the embodiments, the reflector assembly 200 further includes a fastener 240, the box 230 includes a first board 231 and a second board 232 arranged at intervals along the horizontal third direction, the bracket 220 is located between the first board 231 and the second board 232. The first board 231 and the second board 232 are provided with sliding holes 250, and one end of the fastener 240 extends into the sliding holes 250 on the first board 231 or the second board 232 respectively, and is detachably connected with the upper end of the bracket 220 at the corresponding position.

Specifically, the lower end of the bracket 220 is rotatably connected with the first board 231 and the second board 232 respectively, and the upper end of the bracket 220 is slidably connected with the first board 231 and the second board 232 respectively, so that the bracket 220 is capable of rotating stably. When the upper end of the bracket 220 is connected with the fastener 240, the bracket 220 is fixed between the first board 231 and the second board 232, and in the first direction, the bracket 220 remains motionless relative to the optomechanical component 110, that is, the reflector 210 is motionless relative to the optomechanical component 110, thereby stably reflecting light to the workbench 300. When the upper end of the bracket 220 and the fastener 240 are disassembled, the upper end of the bracket 220 is capable of rotating around the lower end of the bracket 220, so that the reflector 210 is capable of rotating around the horizontal third direction relative to the optomechanical component 110, thereby adjusting the angle of the outgoing light, so that the light projected by the optomechanical component 110 on the workbench 300 is capable of completely cover the release film in the trough device 700, thereby ensuring the size and shape of the printed model and improving printing accuracy.

Further, the reflector assembly 200 also includes a first bent plate 221, the first bent plate 221 is respectively connected to both sides of the upper end of the bracket 220 along the horizontal third direction, and the first board 231 and the second board 232 are attached to the corresponding first bent plate 221 respectively, and one end of the fastener 240 passing through the sliding hole 250 is respectively connected to the corresponding first bent plate 221, so that when the bracket 220 during rotation, due to the first bent plate 221 being always affixed to the first board 231 and the second board 232, thereby improving the stability of the rotation of the bracket 220.

Referring to Fig. 1 and Fig. 7, in one embodiment, the reflector assembly 200 further includes a bottom plate 270, which is rotatably connected to the lower end of the bracket 220, and the two ends of the bottom plate 270 along the horizontal third direction are respectively connected to the first board 231 and the second board 232.board The box 230 includes a third board 233, one end of the third board 233 is connected to the first board 231 and the other end is connected to the second board 232, and a bottom plate 270 is affixed to the third board 233.

Specifically, during the rotation of the bracket 220, the bottom plate 270 is always affixed to the third board 233, thereby improving the stability of the rotation of the bracket 220.

Further, the reflector assembly 200 also includes a second bent plate 271 and a fixing member. The second bent plate 271 is respectively connected to both sides of the lower end of the bracket 220 along the horizontal third direction, and the first board 231 and the second board 232 are attached to the corresponding second bent plate 271 respectively. The first board 231 and the second board 232 are fixed to the corresponding second bent plate 271, respectively, by the fixing member, so as to improve the stability of the connection of the bottom plate 270 to the first board 231 and the second board 232. Wherein, the fixing member may be a screw.

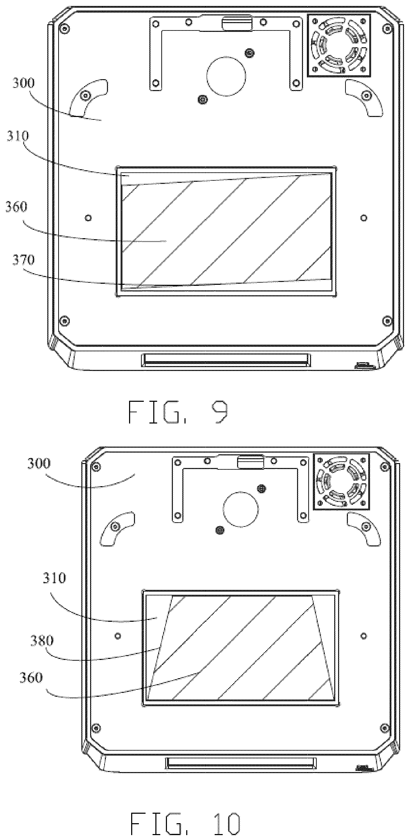

Referring to Fig. 8, Fig. 9 and Fig. 10, Fig. 8 is a schematic view of the jig in the light source device provided by the present disclosure; Fig. 9 is a first schematic view of the light projected on the workbench in the light source device provided by the present disclosure; Fig. 10 is a second schematic view of the light projected on the workbench in the light source device provided by the present disclosure. In one of the embodiments, the light source device further includes a jig 320, the jig 320 is configured to be installed on the light transmission hole 310 on the workbench 300. An annular area is provided on the edge of the jig 320, a plurality of first scale lines 330 arranged at intervals extending along the first direction and a plurality of second scale lines 340 arranged at intervals extending along the horizontal third direction are arranged on the annular area. The light emitted by the optomechanical assembly 100 is capable of being projected on the jig 320 to form a projection 360, and fall into the annular area. When both the optomechanical assembly 100 and the reflector assembly 200 are rotated to the working position, the contour lines on both sides of the projection 360 along the horizontal third direction are parallel to the first scale line 330, and the contour lines on both sides of the projection 360 along the first direction are parallel to the second scale line 340.

Specifically, the jig 320 is installed below the trough device 700, the size of the release film is slightly smaller than the size of the light transmission hole 310 of the workbench 300, and the annular area is set on the edge of the area corresponding to the light transmission hole 310 on the jig 320. It should be noted that, in order to ensure the light intensity, the projection 360 formed by the light projected on the workbench 300 by the reflector 210 is capable of just cover the release film. Since the size of the release film is slightly smaller than the size of the light transmission hole 310 of the workbench 300, the size of the projection 360 projected on the jig 320 will be slightly smaller than the size of the light transmission hole 310 of the workbench 300, and the projection 360 formed by the light passing through the light transmission hole 310 on the workbench 300 is capable of fall into the annular area. Wherein, for the convenience of distinction, the contour lines on both sides of the projection 360 along the horizontal third direction are the first contour lines 370, and the contour lines on both sides of the projection 360 along the first direction are the second contour lines 380. Wherein, the working position is a current position where the first contour line 370 is parallel to the first scale line 330, the second contour line 380 is parallel to the second scale line 340, and the projection 360 is just able to cover the release film time optomechanical component 110 and the reflector 210.

Since the optomechanical component 110 and the reflecting reflector 210 are arranged at intervals along the first direction, when there is a processing error or an assembly error, the optomechanical component 110 may deviate relative to the reflecting reflector 210 in the horizontal third direction, so that the incident angle of the incident light changes, thereby changing the outgoing angle of the incident light, thereby causing the projection 360 to shift. There is an included angle between the first contour line 370 and the first scale line 330, creating an angular error that prevents some of the consumables from being illuminated by the light at all times, thus affecting the shape and size of the printed model. By rotating the optomechanical module 110 around the second direction, the optomechanical component 110 is capable of being rotated to the working position, so that the first contour line 370 is parallel to the first scale line 330, thereby ensuring the position of the first contour line 370.

Since the optomechanical component 110 and the reflecting reflector 210 are arranged at intervals along the first direction, when there is a processing error or an assembly error, the reflector 210 may deviate in the second direction relative to the optomechanical component 110, so that the outgoing angle of the incident light changes, which in turn causes the projection 360 to shift. There is an included angle between the second contour line 380 and the second scale line 340, creating an angular error that prevents some of the consumables from being illuminated by the light at all times, thus affecting the shape and size of the printed model. By rotating the bracket 220 around the horizontal third direction, the reflector 210 is capable of being rotated to the working position, so that the second contour line 380 is parallel to the second scale line 340, thereby ensuring the position of the second contour line 380. It should be noted that Fig. 9 and Fig. 10 are exaggerated effects, and the actual deviation of the deflection of the first contour line 370 and the second contour line 380 is relatively small.

Further, the jig 320 is made of acrylic, and in other embodiments, it may also be made of other materials such as glass.

Referring to Fig. 1, Fig. 8, Fig. 9 and Fig. 10, in one embodiment, the light source device further includes a measuring instrument, which is arranged above the jig 320. The measuring instrument is configured to detect the angle between the outline of the projection 360 formed by the light emitted by the optomechanical component 110 projected on the jig 320 and the first scale line 330 or the second scale line 340.

Specifically, since the actual deflection error between the first contour line 370 and the second contour line 380 is small, it is inconvenient to observe with the naked eye, and the position of the contour line of the projection 360 falling into the annular area is capable of being visually detected by a measuring instrument. When there is an angle between the first contour line 370 and the first scale line 330, adjust the optomechanical component 110 until the first contour line 370 is parallel to the first scale line 330; when there is an angle between the second contour line 380 and the second scale line 340, adjust the reflector 210 until the second contour line 380 is parallel to the second scale line 340, so that the effect of the projection 360 is capable of being improved, so that the projection 360 is capable of cover the release film of the trough device 700, and the printing accuracy is capable of being improved. Exemplary, the measuring instrument is a vision measuring instrument.

Referring to Fig. 1 and Fig. 2, in one embodiment, the 3D printing apparatus provided by an embodiment of the present disclosure includes the above-mentioned light source device. By rotating the optomechanical component 110 in the light source device around the second direction, the incident angle of the incident light is adjusted, thereby adjusting the angle of the outgoing light; through the rotation of the reflector 210 around the first direction, the angle of the outgoing light is adjusted, thereby adjusting the position of the outline of the projection 360 projected by the optomechanical assembly 100 on the workbench 300, improving the effect of the projection 360, and further improving the printing accuracy.

Further, the 3D printing apparatus further includes a casing 410 and a base 420. One end of the support column away from the support plate 125 and one end of the sliding column away from the support plate 125 are installed on the base 420. The third board 233 is installed on the base 420, the bottom end of the housing 410 is connected to the base 420, the upper end of the housing 410 is connected to the workbench 300. The housing 410, the base 420 and the workbench 300 form a closed space, due to the box 230 is accommodated in the space, so that the working environment of the light source light path is sealed and the printing effect is improved.

Furthermore, the 3D printing apparatus further includes a forming platform device 500, a driving device 600, and a rackmount 800. One end of the rackmount 800 is connected to the workbench 300, and the other end is connected to the forming platform device 500. The driving device 600 is installed on the rackmount 800. The forming platform device 500 is arranged above the trough device 700. The driving device 600 drives the forming platform device 500 to move upwards, so that the printed models stuck on the forming platform device 500 can move upwards synchronously, making it easier to print the model.

The technical features of the above-mentioned embodiments may be combined arbitrarily. To make the description concise, all possible combinations of the technical features in the above-mentioned embodiments are not described. However, as long as there is no contradiction in the combination of these technical features, they should be considered as within the scope of this specification.

The above-mentioned embodiments only express several implementation modes of the present disclosure, and the description thereof is relatively specific and detailed, but it should not be understood as limiting the scope of the present disclosure. It should be noted that those skilled in the art can make several modifications and improvements without departing from the concept of the present disclosure, and these all belong to the protection scope of the present disclosure. Therefore, the scope of protection of the present disclosure should be according to the appended claims.

## Claims

1. A light source device, **characterized in that** comprises an optomechanical assembly, a reflector assembly, and a workbench; the optomechanical assembly and the reflector assembly are arranged at intervals along a first direction, and both are located below the workbench, the reflector assembly is located at an exit end of the optomechanical assembly, the optomechanical assembly is capable of rotating around a second direction, the reflector assembly is capable of rotating around a horizontal third direction, and the reflector assembly is configured to reflect light emitted by the optomechanical assembly to the workbench, the first direction, the second direction, and the horizontal third direction are perpendicular to each other.

2. The light source device of claim 1, **characterized in that** the light source device comprises a fixing frame, the fixing frame is connected to the workbench, the optomechanical assembly comprises an optomechanical component and a rotating member extending in a vertical direction, an end of the rotating member is connected to the optomechanical component, and another end is rotatably connected to the fixing frame, and the optomechanical component is capable of rotating around an axial direction of the rotating member.

3. The light source device of claim 2, **characterized in that** the optomechanical assembly further comprises a moving member, the fixing frame is provided with a moving hole, an end of the moving member is connected to the optomechanical component, and another end is slidably connected to a hole wall of the moving hole, and when the rotating member rotates relative to the fixing frame, the moving member is capable of sliding in the moving hole.

4. The light source device of claim 3, **characterized in that** the fixing frame comprises an adapter plate and two side plates, the two side plates are respectively connected to two ends of the adapter plate, an end of the side plate away from the adapter plate is connected to the workbench, the rotating member passes through the adapter plate, and the moving hole is provided on the adapter plate.

5. The light source device of claim 1, **characterized in that** the reflector assembly comprises a reflector and a bracket extending along the horizontal third direction, the light source device comprises a box, the bracket is arranged inside the box, the reflector is mounted on the bracket, a lower end of the bracket is rotatably connected to a side wall of the box, and an upper end of the bracket is capable of rotating around the lower end of the bracket.

6. The light source device of claim 5, **characterized in that** the side wall of the box is provided with sliding hole, the upper end of the bracket is slidably connected to the hole wall of the sliding hole, when the upper end of the bracket rotates around the lower end of the bracket, the upper end of the bracket is capable of sliding in the sliding hole.

7. The light source device of claim 6, **characterized in that** the reflector assembly further comprises a fastener, the box comprises a first board and a second board arranged at intervals along the horizontal third direction, the bracket is located between the first board and the second board, the first board and the second board are provided with the sliding holes, and an end of the fastener extends into the sliding holes on the first board and the second board respectively, and is detachably connected to the upper end of the bracket at the corresponding position.

8. The light source device of claim 7, **characterized in that** the reflector assembly further comprises a bottom plate, the lower end of the bracket is rotatably connected to the bottom plate, two ends of the bottom plate along the horizontal third direction are respectively connected to the first board and the second board, the box comprises a third board, an end of the third board is connected to the first board, and another end is connected to the second board, and the bottom plate is attached to the third board.

9. The light source device of claim 1, **characterized in that** the light source device further comprises a jig, the jig is used to be installed on a light transmission hole on the workbench, an annular area is provided on an edge of the jig, and a plurality of spaced first scale lines extending along the first direction and a plurality of spaced second scale lines extending along the horizontal third direction are provided on the annular area, the light emitted by the optomechanical assembly is capable of being projected onto the jig to form a projection which falls within the annular area, when both the optomechanical assembly and the reflector assembly are rotated to an operating position, a contour lines on both sides of the projection along the horizontal third direction are parallel to the first scale line, and the contour lines on both sides of the projection along the first direction are parallel to the second scale line.

10. A 3D printing apparatus, **characterized in that** comprises the light source device according to any one of claims 1-9.
